# EUROPEAN PATENT SPECIFICATION

(11) **EP 1 848 309 B1**
(45) Date of publication and mention of the grant of the patent: **09.03.2016**
(21) Application number: 06701823.4
(22) Date of filing: 26.01.2006
(51) Int. Cl.: A47J 31/00, A47J 31/06, A47J 31/40

(54) **METHOD FOR PREPARING A BEVERAGE SUITABLE FOR CONSUMPTION FROM AT LEAST TWO INGREDIENTS TO BE DISSOLVED AND/OR EXTRACTED AND AN AMOUNT OF LIQUID**
VERFAHREN ZUR ZUBEREITUNG EINES ZUM VERZEHR GEEIGNETEN GETRÄNKS AUS MINDESTENS ZWEI IN EINER FLÜSSIGKEITSMENGE AUFZULÖSENDEN UND/ODER ZU EXTRAHIERENDEN ZUTATEN
PROCEDE POUR PREPARER UNE BOISSON DESTINEE A LA CONSOMMATION A PARTIR DE DEUX INGREDIENTS A DISSOUDRE ET/OU A EXTRAIRE ET D'UNE QUANTITE DE LIQUIDE

(30) Priority: 27.01.2005 NL 1028134
(43) Date of publication of application: 31.10.2007
(73) Proprietor: Koninklijke Douwe Egberts B.V., 3532 AD Utrecht (NL)
(72) Inventor: STEENHOF, Vincent Jan, NL-5215 AD 's-hertogenbosch (NL); KNITEL, Joseph Theodoor, NL-3454 KJ De Meern (NL)
(74) Representative: V.O.
(86) International application number: PCT/NL2006/000046
(87) International publication number: WO 2006/080844

(56) References cited:
- WO-A-02/074143
- WO-A-2005/018394

## Description

The invention relates to a method for preparing a beverage suitable for consumption from at least two ingredients to be dissolved and/or extracted and an amount of liquid such as water which is supplied to the ingredients, the method comprising the following steps:
- a first ingredient is utilized in a first holder system; and
- a second ingredient is utilized in a second holder system.

The invention also relates to an apparatus for preparing a beverage suitable for consumption from two ingredients to be dissolved and/or extracted and an amount of liquid such as water which is supplied to the ingredients, the apparatus being provided with a first holder system in which a first ingredient is included, the first holder system being provided with at least one inflow side and at least one outflow side, the apparatus being further provided with a second holder system in which a second ingredient is included, the second holder system being provided with at least one inflow side and at least one outflow side.

Such a method an apparatus are known from, for instance, European patent application 1398279.

With the known method an apparatus, the first holder system consists of a coffee pad manufactured from filtering paper which is filled with ground coffee, and the second holder system of a milk pad manufactured from filtering paper which is filled with a rigid body and a powder milk/creamer. Here, the first and second holder systems are placed in a collecting container. The coffee pad then lies on top of the milk pad.

In use, hot water is supplied to the holder so that the hot water flows through the coffee pad and the milk pad. When the coffee pad is flowed-through with hot water, coffee extract is formed. This coffee extract also flows through the milk pad, whereby the milk/creamer dissolves in the coffee extract. The coffee extract with the dissolved milk therein then leaves the collecting container via an outflow opening provided in a bottom of the collecting container.

It is also known from international patent application publication WO 02/074143 to provide a disposable device for use in a beverage brewing system. The known disposable device has multiple ingredient extraction chambers, each containing one or more of the same or different ingredients for fluidization and flavour extraction by a brewing liquid. Normal use of this known device when subjected to a brewing liquid in a beverage brewing system does not exclude that other than predetermined amounts of brewing liquids flow through the respective ingredients.

Although the milk powder/creamer, when it is dissolved in water, has a white colour, the beverage prepared on the basis of the milk pad has a light brown colour as the milk powder/creamer is dissolved in the dark brown coffee extract.

It is further known from US 4858523 to divide in a coffee brewing machine portions of an identical beverage ingredient over a plurality of holders to enable brewing of a large number of single beverage servings. Water is distributed in succession to a selected one of the plurality of holders. This known coffee brewing machine is not suitable for preparing a beverage from at least a first and a second ingredient.

A further object of the invention is to provide a method and apparatus with which, if so desired, further variations such as colour variations in the beverage to be obtained on the basis of the first and second ingredients, are possible.

To this end the invention provides for a method and apparatus as defined in one or more of the appended claims.

In accordance with the method according to the invention, it applies that a first part of the amount of liquid such as hot water is supplied to the first holder system so that the first holder system is flowed-through with the liquid whereby the first ingredient is dissolved or extracted for obtaining a first beverage; a second part of the amount of liquid is supplied to the second holder system so that the second holder system is flowed-through with the liquid such that the second ingredient is dissolved or extracted for obtaining a second beverage part; and the first beverage part and the second beverage part are combined for obtaining the beverage.

As the first and second beverage parts are prepared separately from each other, the first and the second beverage part can additionally, and in mutually different ways, be processed before being combined. In the second beverage part, additionally, air may be whipped in while with the first beverage part, this does not happen.

As the first and the second beverage parts are prepared separately from each other, furthermore, if desired, combining the first and second beverage parts can be carried out in a known manner such that the first and second beverage part do not completely mix. This provides further possibilities for variation in the preparation of the beverage. For instance, the first and second beverage part can be combined such that the second beverage part does not completely mix with the first beverage part. As a result, at least a part of the second beverage part can retain its own colour. The first and the second beverage part can for instance be combined in a third container such as a cup or a mug. Here, for instance, in a known manner, air may further be whipped into the second beverage part. Then, the second beverage part is provided with froth. When the first and second beverage parts are combined, this results in the froth floating on the rest of the beverage. Here, this froth can retain the colour of the second beverage part. If, for instance, the first ingredient comprises ground coffee and the second ingredient a milk powder/creamer, thus, a first beverage part in the form of a coffee extract and a second beverage part in the form of frothed milk can be obtained. When these beverage parts are combined in a third container, the frothed portion of the milk will float on the rest of the beverage consisting of a mixture of coffee extract and milk. Thus, a perfect cappuccino can be obtained.

Whipping air into the second beverage part can, for instance, be obtained by supplying a jet of the second beverage part to a buffer reservoir as described in European patent application 878158 or by supplying a jet of the beverage to a roughened surface as described in European patent application 1317200. Other known methods of whipping in air are possible too. If it is desired that no air is whipped into the first beverage part, the buffer reservoir or the roughened surface may be automatically replaced with a tube guiding the first beverage to the third container without air being whipped in. Also, the second ingredient can be provided with a substance developing froth when a liquid such as water is supplied to the second substance, while the first ingredient does not comprise such a substance.

Also, for instance first, the second part of the amount of liquid can be supplied to the second holder system and, after that, the first part of the amount of liquid can be supplied to the first holder system. The result is that first, the second beverage part is prepared and after that, the first beverage part is prepared.

In particular, here, first of all, the milk is supplied in the form of a jet to the third container. Upon impact of the milk in the third container, air is whipped into the milk. As a result, the third container is filled with milk comprising a froth layer. Thereupon, the coffee extract is supplied in the form of a jet to the third container. Upon impact of the coffee jet on the frothed milk, a small brown dot is formed. Then, the third container is filled with the coffee extract and the frothed milk will float on the coffee extract. Also when the coffee itself is provided with a fine bubble froth layer since air is whipped into the coffee, this process will occur. Thus, according to this variant of the invention too, a cappuccino can be obtained.

The apparatus according to the invention is characterized in that the apparatus is further provided with liquid supply means for supplying to the inflow side of the first holder system a predetermined first part of the amount of liquid so that the first holder system is flowed-through with the liquid, whereby the first ingredient is extracted or dissolved for obtaining a first beverage part which leaves the first holder system via the outflow side of the first holder system, and for supplying to the inflow side of the second holder system a predetermined second part of he amount of liquid so that the second holder system is flowed-through with the liquid, whereby the second ingredient is extracted or dissolves for obtaining a second beverage part which leaves the second holder system via the outflow side of the second holder system, the apparatus being further designed for dispensing the first beverage part and the second beverage part to a receiving container such as a cup or mug.

The invention will presently be further elucidated with reference to the drawing. In the drawing:
Fig. 1 shows a first embodiment of an apparatus according to the invention for carrying out a method according to the invention;
Fig. 2 shows a second embodiment of an apparatus according to the invention for carrying out a method according to the invention; and
Fig. 3 shows a third embodiment of an apparatus according to the invention for carrying out a method according to the invention;

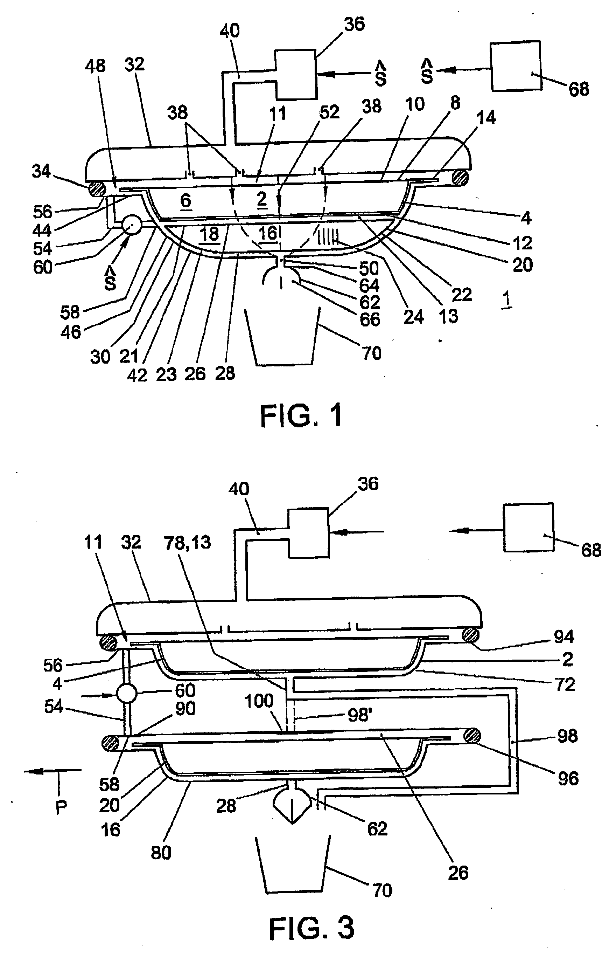

In Fig. 1, reference numeral 1 indicates an apparatus for preparing a beverage suitable for consumption according to the invention. The apparatus is provided with a first holder system 2 in which a first ingredient is included which is soluble in a liquid such as water and/or can be extracted by a liquid such as water. In this example, the first holder system 2 is provided with a first pouch 4 comprising a first ingredient 6 in the form of ground coffee and a first covering 8 accommodating the first ingredient. The first covering is manufactured, at least partly, in this example completely, from a sheet-shaped material, in this example filtering paper. The covering 8 consists of a top sheet 10 manufactured from filtering paper and a bottom sheet 12, interconnected at their circumferential edges and forming a circumferential sealing seam 14 there. In this example, the pouch is of disc-shaped design. The top sheet 10 is of flat design while in this example, the bottom sheet 12 is dish-shaped. However, this is not required; it is also possible, for instance, that the bottom sheet and the top sheet are designed to be identical in form. In this example, the top sheet forms an inflow side 11 of the first holder system for supplying liquid via the inflow side to the first holder system, and the bottom sheet 12 forms an outflow side 13 of the first holder system 4 via which outflow side the liquid supplied to the first holder system can leave the first holder system again.

The apparatus is further provided with a second holder system 16 in which a second ingredient 18 is included. The second ingredient 18 is also a substance soluble in a liquid such as water and/or extractable with the aid of a liquid such as water. In this example, the second ingredient consists of a milk powder/creamer.

In the example, the second holder system 16 is provided with a second pouch 20 comprising the second ingredient 18. The second pouch is further provided with a second covering 22 in which the second ingredient 18 is included. The second covering is manufactured, at least partly, from a sheet-shaped material such as filtering paper, transmissive to a liquid such as water and forming a barrier to the second ingredient. In this example, the entire second covering is manufactured from a sheet-shaped material such as filtering paper and consists of a top sheet 21 and a bottom sheet 23. Further, in the second covering, a rigid grid structure 24 in included (shown in part) of a type described in European patent application 1398279.

The second holder system 16 is provided with an inflow side 26 via which the liquid can be supplied to the second holder system, and an outflow side 28 via which the liquid supplied to the second holder system 16 can leave again.

The apparatus is further provided with a collecting container 30 in which the first and the second holder system 2, 16 are included. The apparatus is further provided with a lid 32 with which the collecting container 30 is sealed off fluid-tightly. To this end, between the lid 32 and the collecting container 30, a sealing ring 34 is included. In this example, the apparatus is further provided with a hot water unit 36, designed for dispensing hot water under pressure. In this example, the lid 32 is of hollow design. At an underside of the lid, the lid is provided with a number of outflow openings 38. The hot water unit 36 is connected by means of a tube 40 to the lid 32 for supplying, in use, hot water to the lid. This water will then leave the lid via the outflow openings 38 and is thus supplied to the collecting container 30. The collecting container 30 is provided with a bottom 42 comprising an annular outside part 44 and a dish-shaped inside part 46. A top side of the collecting container forms an inflow opening 48 of the collecting container. Further, in the bottom 42 of the collecting container, at least one outflow opening 50 is provided. In the collecting container, a liquid flow path 52 extends from the inflow opening 48 of the collecting container to the outflow opening 50 of the collecting container. As is clear from the drawing, the first and second holder system 2, 16 are included in the liquid flow path 52 so that the first and second holder system each form a barrier in the liquid flow path. Here, the first holder system is upstream of the second holder system in the liquid flow path of the collecting container.

The liquid supply means are further provided with a sealable and releasable bypass channel 54, extending from the inflow side of the first holder system at a position 56 outside the first holder system, to the inflow side of the second holder system at a position 58 outside the second holder system. In the bypass channel 54 a regulating valve 60 is included for adjustably sealing and releasing, or partly releasing, the bypass channel 54.

In this example, the apparatus is further provided with an air whip-in unit 62 of which an inlet opening 64 is in fluid communication and/or is formed by the outflow opening 50 of the collecting container 30. The air whip-in unit 62 is further provided with an outflow opening 66 for dispensing the ready beverage. The air whip-in unit may be designed as described in European patent application 1371311.

The apparatus is further provided with a control device 68 which generates control signals ŝ for controlling or activating the hot water unit 36 and the valve 60.

The operation of the apparatus described up to this point is as follows.

By opening the lid 32, in advance, the second holder system 16 and the first holder system 2, respectively, are placed in the collecting container 30. In this example, the first holder system rests on top of the second holder system. As, in this example, the second holder system is provided with the pouch 20 in which the rigid grid structure 24 is included, the first holder system which, in this example, is provided with the pouch 4, can rest well on the first holder system without deforming.

After the first and second holder systems are placed in the collecting container, the collecting container 30 is closed off with the aid of the lid 32. Thereupon, the control device 68 activates the hot water unit 36. The result is that the hot water unit 36 begins supplying hot water to the lid 32. This hot water will leave the lid 32 via the outflow openings 38 of the lid, and be led to the inflow side 11 of the first holder system. At the same time the hot water unit is started or, in this example, in any case before the hot water flowing via the lid into the collecting container, begins building up pressure, the bypass valve 60 is opened by the control device 68. The result is that the water, choosing the line of least resistance, flows via the bypass channel 54 to the position 58 in the collecting container. Thus, this water flows to the inflow side 26 of the second holder system. In order to leave the collecting container 30 via the outflow opening 50, the hot water will then begin to flow through the second holder system. Then, again, the water chooses the line of least resistance, and will flow via the inflow side 26 of the second holder system, that is, via the top sheet 21 of the second pouch 20, through the pouch to then leave the second holder system via the outflow side 28, that is via the bottom sheet 23 of the second pouch 20. Then, the second ingredient, that is the milk powder/creamer, will dissolve in the hot water. The hot water with the creamer dissolved therein then flows via the outflow opening 50 of the collecting container 30 to the air whip-in unit 62. In the air whip-in unit 62, in a known manner, air is whipped into the hot water with the creamer/milk powder dissolved therein, thus forming a second beverage part. The second beverage part flows via the outflow opening 66 of the air whip-in unit 62 to a mug 70. Thus, the mug 70 is partly filled with the second beverage part which, in this example, consists of frothed milk.

The control device 68 is designed for supplying a predetermined, total amount of liquid to the ingredients. As already described hereinabove, of this total amount of liquid, a second part is supplied to the second holder system for obtaining the second beverage part. The moment the hot water unit 36 has supplied the second part of the total amount of liquid, the control device 68 shuts the valve 60. The result is that the hot water which is further supplied to the collecting container and will thereto also choose the line of least resistance, can no longer flow through the bypass channel 54. Instead thereof, the hot water which is led to the inflow side of the first holder system will enter, via the inflow side of the first holder system, that is via the top sheet 10 of the first pouch, the pouch and flow through the pouch to thereupon leave the first holder system via the outflow side, that is, in this example, via the bottom sheet of the first pouch. Thus, a predetermined first part of the predetermined amount of liquid is supplied to the first holder system so that the first holder system is flowed-through with the liquid, while the first ingredient is extracted for obtaining a first beverage part. In this example, the first beverage part is formed by a coffee extract. The coffee extract will then be supplied from the outflow side of the first holder system and via the inflow side of the second holder system to the second holder system, and, thereupon flow from the second holder system via the outflow side of the second holder system. In other words, the coffee extract will then flow through the second pouch. As the second pouch has already, at an earlier stage, been flowed-through by the second amount of water, in this example, at least the greater portion of the milk powder/creamer will already have dissolved in the second pouch. When the coffee extract flows through the second pouch, it may be so that a further portion of the second ingredient also dissolves and begins forming part of the first beverage part. Then, the first beverage part will leave the collecting container 30 via the outflow opening 50. The air whip-in unit 62 will then, again, whip air into the coffee extract so that a coffee extract with a fine bubble froth layer is obtained. Then, the coffee extract is supplied in the form of a jet to the mug 70. The mug 70 is filled with coffee extract while the frothed part of the second beverage part, that is the frothed milk, will float on the coffee extract. Thus, a beverage is obtained in the form of a cappuccino while the cappuccino is provided with an attractive, white layer of frothed milk.

When the first part of the total amount of hot water to be dispensed has been dispensed to the collecting container, the control device will deactivate the hot water unit. In this example it therefore applies that a first part of the amount of liquid, in this example hot water, is supplied to the first holder system so that the first holder system is flowed-through with liquid, thereby extracting the first ingredient for obtaining a first beverage part. Also, a second part of the amount of liquid, in this example hot water, is supplied to the second holder system so that the second holder system is flowed-through with the liquid so that the second ingredient is dissolved for obtaining the second beverage part. Also, the first and the second beverage part are combined for obtaining the beverage. It also applies in this example that first, the second part of the amount of liquid is supplied to the second holder system and after that, the first part of the amount of liquid is supplied to the first holder system. It further applies that the first beverage part from the first holder system is also supplied to the second holder system and, after that, from the second holder system, is combined with the first beverage part.

In this example, viewed in time, the dispensing of the first amount of liquid links up perfectly to the dispensing of the second amount of liquid. The fact is that the moment at which dispensing the second amount of liquid is started is determined by the moment the valve 60 is opened. However, this is not required. It is also conceivable that, after the second amount of liquid has been dispensed, the control device 68 deactivates the hot water unit to then close the valve. After the valve is closed, the control unit can, again, activate the hot water unit.

It is also conceivable that the hot water unit supplies the total amount of liquid as indicated in the above-described example in one go to the collecting container, while after the second amount of liquid has been supplied to the collecting container 30, the control device 68 slowly closes the valve 60. When the valve has closed completely, the first part of the total amount of liquid is supplied to the collecting container 30. During closing, a third part of the total amount of liquid is supplied to the first and second holder system in a variable manner. Gradually, less and less of the third part of the amount of liquid will be supplied directly to the second holder system and an increasing portion of the third part of the amount of liquid will be supplied directly to the first holder system. Here, a gradual transition is involved instead of a switched transition as described in the above example.

It is also conceivable that the valve is designed such that it releases the bypass channel when the pressure in the bypass channel is below a predetermined value, while the liquid supply means are further designed for dispensing, when the second amount of liquid is being dispensed to the inflow side of the first holder system, the second amount of liquid with a pressure which is lower than the predetermined value so that the valve of the bypass channel is opened, and for dispensing, when the first amount of liquid is being dispensed to the inflow side of the first holder system, the first amount of liquid with a pressure which is higher than the predetermine value so that the valve of the bypass channel is closed.

In this example, the control device 68 can control the hot water unit in a manner such that first of all, hot water is dispensed with a pressure that is lower than the predetermined value. During this period, the second amount of water is dispensed. Then, the control device 68 ensures that the hot water unit dispenses water with a pressure that is greater than the predetermined value. The valve will then close. During this period, the first amount of water is dispensed. Then, the valve 60 needs not be directly controlled by the control device. Instead thereof, the valve reacts to the pressure of the hot water which is supplied to the holder system 30, and is therefore controlled indirectly by the control device 68. Such variants are each understood to fall within the framework of the invention.

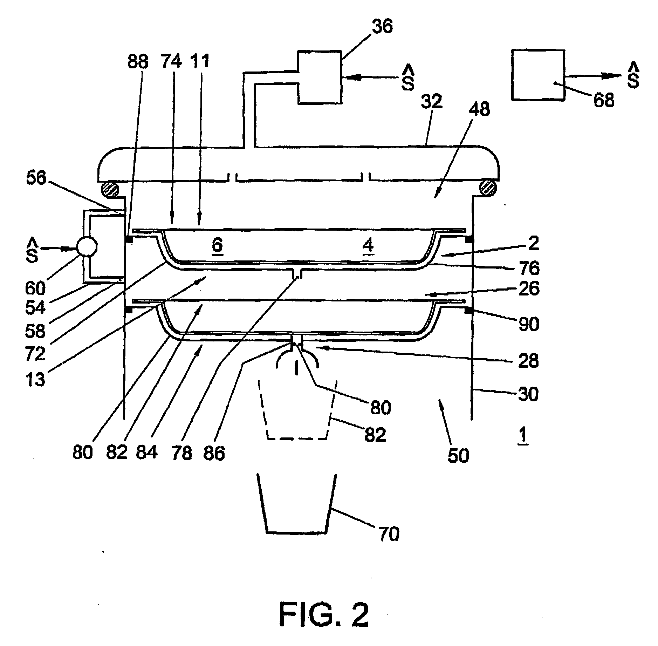

In Fig. 2, a second embodiment of an apparatus according to the invention is indicated. Here, parts corresponding to Fig. 1 are provided with the same reference numerals. For the sake of clarity however, a number of reference numerals are omitted. In the example of Fig. 2, the first holder system 2 is further provided with a first holder 72 having an open top side 74 defining the inflow side 11 of the first holder system. The holder 72 is further provided with a bottom 76 with an outflow opening 78 defining the outflow side 13 of the first holder system. The first holder 72 may be a holder of the type described in European patent application 0 904 717. Here, the first pouch 4 is included in the first holder 72. The pouch 4 and the holder 72 together form the first holder system 2. Further, it applies that the second holder system 16 is provided with a second holder 80 having an open top side 82 and a bottom 84 with an outflow opening 86, the second pouch being included in the second holder 80. In this example, the top side 82 defines the inflow side 26 of the second holder system and the outflow opening 86 defines the outflow side 28 of the second holder system. In this example, the rigid grid structure 24 of the second pouch can be omitted. The fact is that the first pouch does not directly rest on the second pouch because it is included in the first holder 72. In the case of Fig. 2 too, the first and second holder system, that is, the first holder comprising the first pouch and the second holder comprising the second pouch are included in a collecting container 30. Here, the first holder 72 rests on a rubber sealing ring 88 which is fixedly connected to an inside wall of the collecting container 30. Further, the second holder 80 rests on a rubber sealing ring 90 also connected to the inside wall of the collecting container 30. Again, the collecting container 30 is provided with an inflow opening 48 and an outflow opening 50 between which the liquid flow path extends. In this liquid flow path, again, the first and second holder systems are included thus forming a barrier in the liquid flow path. It is clear that the outflow opening 50 in this example has no functional meaning. The side wall of the holder 30 below the ring 90 can be omitted. The outflow opening 50 is then formed by the surface surrounded by the ring 90.

In this example, the air whip-in unit 62 is connected to the outflow opening 86 of the second holder 80. The apparatus according to Fig. 2 described up to this point operates as follows. First, the lid 32 is opened. This allows for the first and second holder 72, 80 to be taken from the collecting container 30. The second holder 80 can then be filled with the second pouch while the first holder 72 is filled with the first pouch. Thereupon, the second holder and the first holder, as shown in Fig. 2, are placed in the collecting container 30. Then, the collecting container 30 is closed off with the lid 32.

Completely analogously to that what is described hereinabove, the control device 68 will ensure that first, the second part of the amount of hot water is supplied to the collecting container 30 while the valve 60 is open. The result is that the second part of the amount of water that is led to the in-feed side of the first holder system will not flow through the first holder system but will flow, via the bypass channel 54, to the in-feed side of the second holder system. This second part of the amount of hot water will thus flow through the second pouch while the second ingredient dissolves. Then, the hot water with the second ingredient dissolved therein will leave the pouch via the bottom sheet of the pouch. After this, the thus formed second beverage part will leave the second holder via the outflow opening 86. Hence, again, the second beverage part is supplied under pressure to the air whip-in unit 62 so that air is whipped into the second beverage part. Hereupon, the second beverage part will flow, in the form of a (weak) jet, from the air whip-in unit 62, into the mug 70. Therefore, first of all, the mug is filled with the second beverage part which, in this example, consists of frothed milk. Then, completely analogously to what is described in relation to Fig. 1, the control device 68 ensures that the valve 60 is closed so that the hot water will flow through the first pouch. Thus, the first beverage part is formed that leaves the first pouch via the bottom sheet. Then, the first beverage part flows via the outflow opening 78 of the first holder 72 from the first holder 72. This first beverage part will then also flow through the second holder system as discussed in relation to Fig. 1. The first beverage part then leaves the second holder system via the outflow opening 86 of the second holder 80. Then, as a result, air will also be whipped into the first beverage part, after which the first beverage part in the form of a (weak) jet is supplied to the mug 70. Completely analogously to what is described hereinabove, the frothed milk will float on the coffee extract, that is, on the first beverage part, so that a cappuccino is formed.

It is noted that both with the apparatus according to Fig. 1 and with the apparatus according to Fig. 2 and more particularly, with any apparatus according to the invention, the air whip-in device 62 can be omitted. Here, it is possible for instance, that instead thereof, another type of air whip in-element is used. For instance, the outflow opening 78 of the second hole the 74 could be provided with a nozzle 91 so that the nozzle forms a (strong) jet from, for instance, the second beverage part. This liquid jet then spouts into a buffer reservoir 92 as described in European patent application 02763091.2. Air is then whipped-in when the jet spouts onto a liquid level in the buffer reservoir formed by a second beverage part supplied earlier to the buffer reservoir. As a result, the second beverage part is provided with a fine bubble froth layer. Thereupon, the second beverage part with the fine bubble froth layer can flow from the buffer reservoir 92, provided to this end with a suitable outflow path as described in the European patent application. The second beverage part with the fine bubble froth layer can then be collected in the mug 70. Then, completely analogously, air can also be whipped into the first beverage part for obtaining coffee with a fine bubble froth layer which is dispensed from the buffer reservoir into the mug 70. Here, again, the frothed milk will float on the frothed coffee extract.

It is also conceivable that the nozzle 91 and the buffer reservoir 92 are omitted so that, in fact, the outflow opening 78 remains. Then, the second ingredient may be provided with the substance which develops froth when the second ingredient dissolves in a liquid such as water, in particular hot water. According to the invention, something similar may in general be utilized. Such variants are all understood to fall within the framework of the invention.

In Fig. 3, a third embodiment of an apparatus according to the invention is indicated while, again, parts corresponding to Figs. 1 and 2 are provided with the same reference numeral. For the sake of clarity, however, a number of reference numerals are omitted. A difference to the apparatus according to Fig. 1 and 2 is that no use is made of a collecting container. The apparatus is provided with a first holder system 2 which is provided with a first pouch 4 included in a first holder 72 as described with reference to Fig. 2. The apparatus is further provided with a second holder system 16 which is provided with a second pouch 20 included in a second holder 80 as described with reference to Fig. 2. In use, the first holder is closed off by the (first) lid 32, which is in fluid communication with the hot water unit 36. The second holder 80 is closed off by a second lid 93. Now, the bypass channel 54 extends from the position 56 located near the inflow side 11 of the first holder system, to the position 58 which is formed by an inflow opening of the second lid 93. Therefore, in use, the bypass channel 54 extends, again, from the inflow side 11 to the inflow side 26. The operation of the apparatus described up to this point is as follows. First, the lid 32 can be lifted for opening the first holder 72. As a result, the first pouch 4 can be placed into the first holder whereupon the lid 32 can be placed on the first holder. Again, between the lid 32 and the first holder, there is a sealing ring 94. The second holder 80 can be slid from the apparatus in the direction of the arrow P so that the second holder can be filled with the second pouch 20. After this, the second holder 80 can be slid back and be pressed, in a manner known per se, against a sealing ring 96 of the second lid 93 so that the second holder can be sealed off fluid-tightly by the second lid. The operation of the apparatus described up to this point may be as follows. First, the control device 68 ensures that now, first, the first amount of water is supplied to the first lid, while the valve 60 is closed. The result is that the first amount of water is fed to the in-feed side 11 to, thereupon, flow through the first pouch so that the first beverage part will be obtained. The first beverage part leaves the first holder via the outflow opening 78 and is then supplied, via a tube 98, to the mug 70. Hence, the mug 70 is first of all filled with coffee extract. Then, the control device opens the valve 60. As a result, the water which is supplied to the in-feed side 11 will then, at least for the greater part, flow via the bypass channel to the second holder. In this manner, the second part of the hot water flows through the second pouch, thereby forming the second beverage part. This second beverage part is supplied to the air whip-in device 62 so that milk with a fine bubble froth layer is obtained. The thus frothed milk leaves the air whip-in device 62 and ends up on top of the coffee extract already present in the mug 70. Again, the frothed milk will float on the coffee extract so that a cappuccino is formed. On the basis of the apparatus of Fig. 3, other variants are conceivable too. For instance, the channel 98 can be omitted. Instead thereof, the outflow opening 78 of the first holder 72 can be connected, via a channel 98', to an inflow opening 100 of the second lid 93. The result is that, as described with reference to Figs. 1 and 2, the first beverage part which is dispensed through the outflow opening of the first holder, will also flow through the second holder system. Here, however, it is preferred that first of all, the second beverage part is prepared and then the first beverage part is prepared. Such variants are each understood to fall within the framework of the invention. The invention is not limited in any manner to the exemplary embodiments described hereinabove. Generally, the first and second ingredients differ from each other. It is conceivable that, for instance, the second ingredient further contains additives such as, for instance, sugar. It is also conceivable that the first ingredient and/or the second ingredient are provided with a concentrate such as, for instance, a concentrate for preparing coffee and/or a concentrate for preparing milk, cocoa etc. The first and/or second ingredient can also comprise other dry matter such as cocoa. Further, the device for whipping-in air can be omitted, or be replaced with other devices known per se for whipping-in air, such as a device with which an impact surface is utilized as described in European patent application 1317200. In Fig. 1 for instance, the outflow opening of the collecting container can then be provided with a nozzle, while with the aid of the nozzle, a jet spouts directly on the impact surface, whereafter the thus obtained beverage with fine bubble froth layer is collected in the mug 70. It is also conceivable that with the aid of a nozzle, one can spout directly into the mug 70 so that in this manner, air is whipped in. This can be utilized with each of the exemplary embodiments outlined hereinabove. It is also conceivable that the liquid on the basis of which the first beverage part is prepared has a different temperature from the liquid on the basis of which the second beverage part is prepared. To this end, the hot water unit may be prepared with means for varying the temperature of the liquid, in this example hot water. It is also conceivable that the hot water unit dispenses other liquids than water. For instance, the liquid can already contain ingredients for preparing the beverage. With the apparatus according to Fig. 3, it is further also conceivable that the valve 60 is designed as a pressure sensitive valve which can be controlled to open and close, depending on the pressure prevailing on the infeed side of the valve. The valve can then be operated by regulating the pressure with which the liquid is dispensed by the water unit 36. Here, the valve may open precisely when the pressure rises above a predetermined value and close again when the pressure drops below a predetermined value. For preparing the second beverage part, the pressure with which the liquid is fed to the inflow opening 11 will then be higher than the predetermined value. During this period, the valve is opened for preparing the second beverage part. After this, the pressure of the liquid which is fed to the inflow side 11 is, conversely, reduced so that the valve will close as a result of which the first beverage part will be prepared. Regulating the pressure can, again, be carried out by the control unit 68, controlling the hot water unit 36 accordingly. Such a variant can be utilized with each embodiment described herein. Such variants too fall within the framework of the present invention.

## Claims

1. A method for preparing a beverage suitable for consumption from at least two ingredients (6, 18) to be dissolved and/or extracted and an amount of liquid such as water which is supplied to the ingredients, the method comprising the following steps:
- a first ingredient (6) is utilized in a first holder system (2); and
- a second ingredient (18) is utilized in a second holder system (16),
wherein, the second ingredient (18) differs from the first ingredient (6) and in that the method further comprises the following steps:
- controlling supply of a predetermined first part of the amount of liquid such as hot water utilizing a liquid supply means (36, 68) to the first holder system (2) so that the first holder system is flowed-through with the liquid whereby the first ingredient (6) is dissolved or extracted for obtaining a first beverage part;
- controlling supply of a predetermined second part of the amount of liquid utilizing the liquid supply means (36, 68) to the second holder system (16) so that the second holder system is flowed-through with the liquid such that the second ingredient (18) is dissolved or extracted for obtaining a second beverage part; and
- the first beverage part and the second beverage part are combined for obtaining the beverage, **characterized in that** first, the second part of the amount of liquid is supplied to the second holder system (16) and, after that, the first part of the amount of liquid is supplied to the first holder system (2), and **in that** the first beverage part is also supplied from the first holder system (2) to the second holder system (16) and, after that, from the second holder system, is combined with the second beverage part.

2. A method according to claim 1, **characterized in that** the first ingredient (6) comprises a product to be extracted such as ground coffee, the first holder system (2) being provided with a first pouch (4) provided with the first ingredient (6) and a first covering (8) in which the first ingredient is included, the first covering being manufactured, at least partly, from a sheet-shaped material such as filtering paper, transmissive to water and forming a barrier to the first ingredient, and **in that** the second ingredient (18) comprises a water-soluble product such as a creamer/milk powder, the second holder system (16) being provided with a second pouch (20) provided with the second ingredient and a second covering (22) in which the second ingredient is included, the second covering being manufactured, at least partly, from a sheet-shaped material such as filtering paper, transmissive to the liquid and forming a barrier to the second ingredient.

3. A method according to claim 2, **characterized in that** the first holder system (2) is further provided with a first holder with at least one inflow side (11) and at least one outflow side (13), with the first pouch (4) included in the first holder, while the second holder system (16) is further provided with a second holder with an inflow side (26) and an outflow side (28), with the second pouch (20) included in the second holder, and wherein the second part of the amount of liquid is supplied to the inflow side (26) of the second holder so that the liquid flows through the second pouch (20) for obtaining the second beverage part which leaves the second holder via the outflow side (28) of the second holder, while the first part of the amount of liquid is supplied to the inflow side (11) of the first holder so that the liquid flows through the first pouch (4) for obtaining the first beverage part which leaves the first holder via the outflow side (13) of the first holder.

4. A method according to claims 1 and 3, **characterized in that** the first beverage part which leaves the first holder is supplied to the inflow side (26) of the second holder so that the first beverage part flows through the second pouch (20) and, thereupon, leaves the second holder via the outflow side (28) of the second holder.

5. A method according to claim 3 or 4, **characterized in that** the second beverage part is first supplied to the inflow side (11) of the first holder and is then rerouted to the inflow side (26) of the second holder and flows through the second holder without flowing through the first holder.

6. A method according to any one of the preceding claims, **characterized in that** the first holder system (2) and the second holder system (16) are included in a collecting container (30).

7. A method according to claim 6, **characterized in that** the collecting container (30) is provided with an inflow opening (48) and an outflow opening (50), with the first part and the second part of the amount of liquid being supplied to the collecting container, whereupon the second part of the amount of liquid is fed to the second holder system (16) and the first part of the amount of liquid is fed to the first holder system (2).

8. A method according to any one of the preceding claims, **characterized in that** the first and second beverage part are combined in a third container such as a cup or mug (70).

9. A method according to any one of the preceding claims, **characterized in that** air is whipped into the second beverage part.

10. A method according to any one of the preceding claims, **characterized in that** air is whipped into the first beverage part.

11. A method according to any one of the preceding claims, **characterized in that** the first part of the amount of liquid is supplied under pressure to the first holder system (2).

12. A method according to any one of the preceding claims, **characterized in that** the second part of the amount of liquid is supplied under pressure to the second holder system (16).

13. A method according to any one of the preceding claims, **characterized in that** the first part of the amount of liquid is heated.

14. A method according to any one of the preceding claims, **characterized in that** the second part of the amount of liquid is heated.

15. A method according to any one of the preceding claims, **characterized in that** the first beverage part is dispensed in the form of a jet.

16. A method according to any one of the preceding claims, **characterized in that** the second beverage part is dispensed in the form of a jet.

17. An apparatus (1) for preparing a beverage suitable for consumption from at least two ingredients (6, 18) to be dissolved and/or extracted and a amount of liquid such as water which is supplied to the ingredients, the apparatus being provided with a first holder system (2) in which a first ingredient (6) is included, the first holder system being provided with at least one inflow side (11) and at least one outflow side (13), the apparatus being further provided with a second holder system (16) in which a second ingredient (18) is included, the second holder system being provided with at least one inflow side (26) and at least one outflow side (28), wherein the apparatus is further provided with liquid supply means (36, 68) for controlling supply to the inflow side (11) of the first holder system (2) a predetermined first part of the amount of liquid so that the first holder system is flowed through with the liquid whereby the first ingredient (6) is extracted, or dissolves for obtaining a first beverage part which leaves the first holder system via the outflow side (13) of the first holder system (2), and for controlling supply to the inflow side (26) of the second holder system (16) a predetermined second part of the amount of liquid so that the second holder system is flowed through with the liquid whereby the second ingredient (18) is extracted, or dissolves for obtaining a second beverage part which leaves the second holder system via the outflow side (28) of the second holder system, and wherein the apparatus is further designed for dispensing the first beverage part and second beverage part to a receiving container such as a cup or mug (70), **characterized in that** the liquid supply means (36, 68) are designed for supplying, first, the second part of the amount of liquid to the second holder system (16) and, after that, supplying the first part of the amount of liquid to the first holder system (2), and **in that** the outflow side (13) of the first holder system (2) is in fluid communication with the inflow side (26) of the second holder system (16) such that, in use, the first beverage part is supplied from the outflow side (13) of the first holder system via the inflow side (26) of the second holder system to the second holder system and, thereupon, flows from the second holder system at the outflow side (28) of the second holder system.

18. An apparatus according to claim 17, **characterized in that** the liquid supply means (36, 68) are provided with a sealable and releasable bypass channel (54, 60) extending from the inflow side (11) of the first holder system (2) to the inflow side (26) of the second holder system (16), the liquid supply means (36, 68) being further designed for supplying the second part of the amount of liquid to the inflow side (11) of the first holder system (2) while the bypass channel (54, 60) is opened so that the second part of the amount of liquid flows directly via the bypass channel (54, 60) via the inflow side (26) of the second holder system (16) through the second holder system so that the second ingredient (18) is dissolved or extracted for obtaining the second beverage part which leaves the second holder system via the outflow side (28) of the second holder system, and for supplying the first part of the amount of liquid to the inflow side (11) of the first holder system (2) while the bypass channel (54, 60) is closed off so that the first part of the amount of liquid flows via the inflow side (26) of the second holder system (16) through the first holder system (2) such that the first ingredient (6) is extracted, or dissolves for obtaining the first beverage part which leaves the first holder system via the outflow side (13) of the first holder system.

19. An apparatus according to claim 18, **characterized in that** an inlet (56) of the bypass channel (54, 60) is located near the inflow side (11) outside the first holder system (2).

20. An apparatus according to any one of the preceding claims 17 - 19, **characterized in that** the apparatus is further provided with a collecting container (30) in which the first and second holder system (2, 16) are included.

21. An apparatus according to claims 18 and 20, **characterized in that** the collecting container (30) is provided with at least one inflow opening (48) and at least one outflow opening (50) and a liquid flow path (52) extending from the inflow opening to the outflow opening of the collecting container, the first and second holder system (2, 16) being included in the liquid flow path (52) of the collecting container so that the first and second holder system each form a barrier in the liquid flow path, the first holder system (2) being located upstream of the second holder system (16) in the liquid flow path of the collecting container, while the bypass channel (54, 60) to be closed off and released extends from a position (56) located upstream of the first holder system of the liquid flow path to a position (58) downstream of the first holder system and upstream of the second holder system of the liquid flow path (52).

22. An apparatus according to any one of the preceding claims 17 - 20, **characterized in that** the first holder system (2) is provided with a first pouch (4) provided with the first ingredient (6) and a first covering (8) in which the first ingredient is included, the first covering being manufactured, at least partly, from a sheet-shaped material such as filtering paper, transmissive to the liquid and forming a barrier to the first ingredient while the second holder system (16) is provided with a second pouch (20) provided with the second ingredient (18) and a second covering (22) in which the second ingredient is included, the second covering being manufactured, at least partly, from a sheet-shaped material such as filtering paper, transmissive to the liquid and forming a barrier to the second ingredient.

23. An apparatus according to claim 22, **characterized in that** the first holder system (2) is further provided with a first holder (72) with at least one inflow opening (11, 74) and at least one outflow opening (13, 78), with the first pouch (4) being included in the first holder, the second holder system (16) further being provided with a second holder (80) with an inflow opening (26, 82) and an outflow opening (28, 86) while, in use, the second pouch (20) is included in the second holder (80), while the second part of the amount of liquid is supplied to the inflow opening (26, 82) of the second holder so that the liquid flows through the second pouch (20) for obtaining the second beverage part which leaves the second holder via the outflow opening (28, 86) of the second holder, the first part of the amount of liquid being supplied to the inflow opening (11, 74) of the first holder so that the liquid flows through the first pouch (4) for obtaining the first beverage part which leaves the first holder via the outflow opening (13, 78) of the first holder.

24. An apparatus according to any one of the preceding claims 17 - 23, **characterized in that** the liquid supply means (36, 68) are designed for supplying the first part of the amount of liquid under pressure to the first holder system (2).

25. An apparatus according to any one of the preceding claims 17 - 24, **characterized in that** the liquid supply means (36, 68) are designed for supplying the second part of the amount of liquid under pressure to the second holder system (16).

26. An apparatus according to any one of the preceding claims 17 - 25, **characterized in that** the liquid supply means (36, 68) are designed for heating the first part of the amount of liquid.

27. An apparatus according to any one of the preceding claims 17 - 26, **characterized in that** the liquid supply means (36, 68) are designed for heating the second part of the amount of liquid.

28. An apparatus according to any one of the preceding claims 17 - 27, **characterized in that** the liquid supply means (36, 68) are designed for supplying, first, the second part of the amount of liquid to the second holder system (16) and, subsequently, supplying the first part of the amount of liquid to the first holder system (2).

29. An apparatus according to any one of the preceding claims 17 - 28, **characterized in that** the apparatus is further provided with air whip-in means (62) for whipping air into the first and/or second beverage part.

30. An apparatus according to any one of the preceding claims 17 - 29, **characterized in that** the apparatus is designed for dispensing the first beverage part in the form of a jet.

31. An apparatus according to any one of the preceding claims 17 - 30, **characterized in that** the apparatus is designed for dispensing the second beverage part in the form of a jet.

32. An apparatus according to claim 18, 19 or 21, **characterized in that** the bypass channel (54, 60) is provided with a pressure sensitive valve while opening or closing the valve depends on the prevailing pressure at an entrance of the valve.

33. An apparatus according to any one of the preceding claims 17 - 32, **characterized in that** the water supply means (36, 68) are designed to regulate the pressure with which a liquid is supplied to the inflow side (11) of the first holder system (2).

34. An apparatus according to claims 18, 19, or 21, **characterized in that** the bypass channel (54, 60) is provided with a valve for releasing and closing off the bypass channel, the valve being designed such that it releases the bypass channel when the pressure in the bypass channel is below a predetermined value, the liquid supply means (36, 68) being further designed for dispensing, when the second amount of liquid is being dispensed to the inflow side (11) of the first holder system (2), a second amount of liquid at a pressure which is lower than the predetermined value so that the valve of the bypass channel (54, 60) is opened and for dispensing, when the first amount of liquid is being dispensed to the inflow side (11) of the first holder system (2), the first amount of liquid at a pressure which is higher than the predetermined value so that the valve of the bypass channel (54, 60) is closed.

35. An apparatus according to any one of the preceding claims 17 - 34, not filled with the first ingredient (6) and the second ingredient (18).

36. A method according to any one of claims 1- 16, **characterized in that** at least one of the ingredients (6, 18) is provided with a substance generating froth when it is contacted with a liquid such as water.

37. A method according to claim 36, **characterized in that** the first ingredient (6) comprises ground coffee and that the second ingredient (18) comprises a milk powder/creamer and a substance generating froth when it is contacted with a liquid such as water.

38. An apparatus according to any one of the preceding claims 17 - 34, **characterized in that** at least one of the ingredients (6, 18) is provided with a substance generating froth when it is contacted with a liquid such as water.

39. An apparatus according to claim 38, **characterized in that** the first ingredient (6) comprises ground coffee and that the second ingredient (18) comprises a milk powder/creamer and a substance generating froth when it is contacted with a liquid such as water.

## Patentansprüche

1. Verfahren zur Zubereitung eines zum Verzehr geeigneten Getränks aus mindestens zwei aufzulösenden und/oder zu extrahierenden Zutaten (6, 18) und einer Flüssigkeitsmenge wie Wasser, die den Zutaten zugeführt wird, wobei das Verfahren folgende Schritte umfasst:
- eine erste Zutat (6) wird in einem ersten Haltersystem (2) verwendet; und
- eine zweite Zutat (18) wird in einem zweiten Haltersystem (16) verwendet,
wobei sich die zweite Zutat (18) von der ersten Zutat (6) unterscheidet und wobei das Verfahren ferner folgende Schritte umfasst:
- Steuern der Zufuhr eines vorbestimmten ersten Teils der Flüssigkeitsmenge, beispielsweise heißes Wasser, unter Verwendung eines Flüssigkeitszufuhrmittels (36, 68) zum ersten Haltersystem (2) sodass die Flüssigkeit durch das erste Haltersystem fließt, wobei die erste Zutat (6) aufgelöst oder extrahiert wird, um einen ersten Getränkteil zu erhalten;
- Steuern der Zufuhr eines vorbestimmten zweiten Teils der Flüssigkeitsmenge unter Verwendung des Flüssigkeitszufuhrmittels (36, 68) zu dem zweiten Haltersystem (16) sodass die Flüssigkeit so durch das zweite Haltersystem fließt, dass die zweite Zutat (18) aufgelöst oder extrahiert wird, um einen zweiten Getränkteil zu erhalten; und
- der erste Getränkteil und der zweite Getränkteil kombiniert werden, um das Getränk zu erhalten, **dadurch gekennzeichnet, dass** zuerst der der zweite Teil der Flüssigkeitsmenge dem zweiten Haltersystem (16) zugeführt wird und danach der erste Teil der Flüssigkeitsmenge dem ersten Haltersystem (2) zugeführt wird, und dass der erste Getränkteil auch von dem ersten Haltersystem (2) dem zweiten Haltersystem (16) zugeführt wird und danach von dem zweiten Haltersystem mit dem zweiten Getränkteil kombiniert wird.

2. Verfahren nach Anspruch 1, **dadurch gekennzeichnet, dass** die erste Zutat (6) ein zu extrahierendes Produkt wie gemahlenen Kaffee umfasst, das erste Haltersystem (2) mit einem ersten Beutel (4) mit der ersten Zutat (6) und einer ersten Abdeckung (8), in der die erste Zutat enthalten ist, versehen ist, wobei die erste Abdeckung zumindest teilweise aus einem blattförmigen Material wie Filterpapier, das durchlässig für Wasser ist und eine Barriere zur ersten Zutat bildet, hergestellt ist, und dass die zweite Zutat (18) ein wasserlösliches Produkt wie Kaffeweißer/ Milchpulver umfasst, wobei das zweite Haltersystem (16) mit einem zweiten Beutel (20) mit der zweiten Zutat und einer zweiten Abdeckung (22), in der die zweite Zutat enthalten ist, versehen ist, wobei die zweite Abdeckung zumindest teilweise aus einem blattförmigen Material wie Filterpapier, das durchlässig für die Flüssigkeit ist und eine Barriere zur zweiten Zutat bildet, hergestellt ist.

3. Verfahren nach Anspruch 2, **dadurch gekennzeichnet, dass** das erste Haltersystem (2) ferner mit einem ersten Halter mit mindestens einer Einflussseite (11) und mindestens einer Ausflussseite (13) versehen ist, wobei der erste Beutel (4) in dem ersten Halter enthalten ist, während das zweite Haltersystem (16) ferner mit einem zweiten Halter mit einer Einflussseite (26) und einer Ausflussseite (28) versehen ist, wobei der zweite Beutel (20) in dem zweiten Halter enthalten ist, und wobei der zweite Teil der Flüssigkeitsmenge der Einflussseite (26) des zweiten Halters zugeführt wird, sodass die Flüssigkeit durch den zweiten Beutel (20) fließt, um den zweiten Getränkteil zu erhalten, der den zweiten Halter über die Auslassseite (28) des zweiten Halters verlässt, während der erste Teil der Flüssigkeitsmenge der Einflussseite (11) des ersten Halters zugeführt wird, sodass die Flüssigkeit durch den ersten Beutel (4) fließt, um den ersten Getränkteil zu erhalten, der den ersten Halter über die Ausflussseite (13) des ersten Halters verlässt.

4. Verfahren nach Ansprüchen 1 und 3, **dadurch gekennzeichnet, dass** der erste Getränkteil, der den Halter verlässt, der Einflussseite (26) des zweiten Halters zugeführt wird, sodass der erste Getränkteil durch den zweiten Beutel (20) fließt und dann den zweiten Halter über die Ausflussseite (28) des zweiten Halters verlässt.

5. Verfahren nach Anspruch 3 oder 4, **dadurch gekennzeichnet, dass** der zweite Getränkteil erst der Einflussseite (11) des ersten Halters zugeführt wird und dann zur Einflussseite (26) des zweiten Halters umgeleitet wird und durch den zweiten Halter fließt ohne durch den ersten Halter zu fließen.

6. Verfahren nach einem der vorhergehenden Ansprüche, **dadurch gekennzeichnet, dass** das erste Haltersystem (2) und das zweite Haltersystem (16) in einem Sammelbehälter (30) enthalten sind.

7. Verfahren nach Anspruch 6, **dadurch gekennzeichnet, dass** der Sammelbehälter (30) mit einer Einflussöffnung (48) und einer Ausflussöffnung (50) versehen ist, wobei der erste Teil und der zweite Teil der Flüssigkeitsmenge dem Sammelbehälter zugeführt werden, und wonach der zweite Teil der Flüssigkeitsmenge dem zweiten Haltersystem (16) zugeführt wird und der erste Teil der Flüssigkeitsmenge dem ersten Haltersystem (2) zugeführt wird.

8. Verfahren nach einem der vorhergehenden Ansprüche, **dadurch gekennzeichnet, dass** der erste und der zweite Getränkteil in einem dritten Behälter wie einer Tasse oder einem Becher (70) kombiniert werden.

9. Verfahren nach einem der vorhergehenden Ansprüche, **dadurch gekennzeichnet, dass** Luft in den zweiten Getränkteil geschlagen wird.

10. Verfahren nach einem der vorhergehenden Ansprüche, **dadurch gekennzeichnet, dass** Luft in den ersten Getränkteil geschlagen wird.

11. Verfahren nach einem der vorhergehenden Ansprüche, **dadurch gekennzeichnet, dass** der erste Teil der Flüssigkeitsmenge unter Druck dem ersten Haltersystem (2) zugeführt wird.

12. Verfahren nach einem der vorhergehenden Ansprüche, **dadurch gekennzeichnet, dass** der zweite Teil der Flüssigkeitsmenge unter Druck dem zweiten Haltersystem (16) zugeführt wird.

13. Verfahren nach einem der vorhergehenden Ansprüche, **dadurch gekennzeichnet, dass** der erste Teil der Flüssigkeitsmenge erwärmt wird.

14. Verfahren nach einem der vorhergehenden Ansprüche, **dadurch gekennzeichnet, dass** der zweite Teil der Flüssigkeitsmenge erwärmt wird.

15. Verfahren nach einem der vorhergehenden Ansprüche, **dadurch gekennzeichnet, dass** der erste Getränkteil in Form eines Strahls abgegeben wird.

16. Verfahren nach einem der vorhergehenden Ansprüche, **dadurch gekennzeichnet, dass** der zweite Getränkteil in Form eines Strahls abgegeben wird.

17. Vorrichtung (1) zur Zubereitung eines zum Verzehr geeigneten Getränks aus mindestens zwei aufzulösenden und/oder zu extrahierenden Zutaten (6, 18) und einer Menge einer Flüssigkeit wie Wasser, die den Zutaten zugeführt wird, wobei die Vorrichtung mit einem ersten Haltersystem (2) versehen ist, in dem eine erste Zutat (6) eingeschlossen ist und das Haltersystem mit mindestens einer Einflussseite (11) und mindestens einer Ausflussseite (13) versehen ist, und die Vorrichtung ferner mit einem zweiten Haltersystem (16) versehen ist, in dem eine zweite Zutat (18) eingeschlossen ist, und das zweite Haltersystem mit mindestens einer Einflussseite (26) und mindestens einer Ausflussseite (28) versehen ist, wobei die Vorrichtung ferner mit Flüssigkeitszufuhrmitteln (36, 68) versehen ist, um die Versorgung der Einflussseite (11) des ersten Haltersystems (2) mit einem vorbestimmten ersten Teil der Flüssigkeitsmenge zu steuern, sodass die Flüssigkeit durch das erste Haltersystem fließt, wobei die erste Zutat (6) extrahiert oder aufgelöst wird, um einen ersten Getränkteil zu erhalten, der das erste Haltersystem über die Ausflussseite (13) des ersten Haltersystems (2) verlässt, und um die Versorgung der Einflussseite (26) des zweiten Haltersystems (16) mit einem vorbestimmten zweiten Teil der Flüssigkeitsmenge zu steuern, sodass die Flüssigkeit durch das zweite Haltersystem fließt, wobei die zweite Zutat (18) extrahiert oder aufgelöst wird, um einen zweiten Getränkteil zu erhalten, der das zweite Haltersystem über die Ausflussseite (28) des zweiten Haltersystems verlässt, und wobei die Vorrichtung ferner konzipiert ist, um den ersten Getränkteil und den zweiten Getränkteil an einen Aufnahmebehälter wie eine Tasse oder einen Becher (70) abzugeben, **dadurch gekennzeichnet, dass** die Flüssigkeitszufuhrmittel (36, 68) konzipiert sind, um erst den zweiten Teil der Flüssigkeitsmenge dem zweiten Haltersystem (16) und dann den ersten Teil der Flüssigkeitsmenge dem ersten Haltersystem (2) zuzuführen, und dass die Ausflussseite (13) des ersten Haltersystems (2) in Flüssigkeitskommunikation mit der Einflussseite (26) des zweiten Haltersystems (16) ist, sodass bei Verwendung der erste Getränkteil von der Ausflussseite (13) des ersten Haltersystems über die Einflussseite (26) des zweiten Haltersystems dem zweiten Haltersystem zugeführt wird und dann von dem zweiten Haltersystem an der Ausflussseite (28) des zweiten Haltersystems fließt.

18. Vorrichtung nach Anspruch 17, **dadurch gekennzeichnet, dass** die Flüssigkeitszufuhrmittel (36, 68) mit einem abdichtbaren und freigebbaren Umgehungskanal (54, 60) versehen sind, der von der Einflussseite (11) des ersten Haltersystems (2) zur Einflussseite (26) des zweiten Haltersystems (16) verläuft, die Flüssigkeitszufuhrmittel (36, 68) ferner konzipiert sind, um den zweiten Teil der Flüssigkeitsmenge der Einflussseite (11) des ersten Haltersystems (2) zuzuführen, während der Umgehungskanal (54, 60) geöffnet ist, sodass der zweite Teil der Flüssigkeitsmenge direkt über den Umgehungskanal (54, 60) über die Einflussseite (26) des zweiten Haltersystems (16) durch das zweite Haltersystem fließt, sodass die zweite Zutat (18) aufgelöst oder extrahiert wird, um den zweiten Getränkteil zu erhalten, der das zweite Haltersystem über die Ausflussseite (28) des zweiten Haltersystems verlässt, und um den ersten Teil der Flüssigkeitsmenge der Einflussseite (11) des ersten Haltersystems (2) zuzuführen, während der Umgehungskanal (54, 60) geschlossen ist, sodass der erste Teil der Flüssigkeitsmenge über die Einflussseite (26) des zweiten Haltersystems (16) durch das erste Haltersystem (2) fließt, sodass die erste Zutat (6) extrahiert oder aufgelöst wird, um den ersten Getränkteil zu erhalten, der das erste Haltersystem über die Ausflussseite (13) des ersten Haltersystems verlässt.

19. Vorrichtung nach Anspruch 18, **dadurch gekennzeichnet, dass** ein Einlass (56) des Umgehungskanals (54, 60) nahe der Einflussseite (11) außerhalb des ersten Haltersystems (2) angeordnet ist.

20. Vorrichtung nach einem der vorhergehenden Ansprüche 17-19, **dadurch gekennzeichnet, dass** die Vorrichtung ferner mit einem Sammelbehälter (30) versehen ist, in dem das erste und das zweite Haltersystem (2, 16) enthalten sind.

21. Vorrichtung nach den Ansprüchen 18 und 20, **dadurch gekennzeichnet, dass** der Sammelbehälter (30) mit mindestens einer Einflussöffnung (48) und mindestens einer Ausflussöffnung (50) und mit einem Flüssigkeitsfließweg (52), der von der Einflussöffnung zur Ausflussöffnung des Sammelbehälters verläuft, versehen ist, wobei das erste und das zweite Haltersystem (2, 16) in den Flüssigkeitsfließweg (52) des Sammelbehälters eingeschlossen sind, sodass das erste und das zweite Haltersystem jeweils eine Barriere in dem Flüssigkeitsfließweg bilden, das erste Haltersystem (2) stromaufwärts von dem zweiten Haltersystem (16) in dem Flüssigkeitsfließweg des Sammelbehälters angeordnet ist, während der abzuschließende und freizugebende Umgehungskanal (54, 60) von einer Position (56) stromaufwärts von dem ersten Haltersystem des Flüssigkeitsfließwegs zu einer Position (58) stromabwärts von dem ersten Haltersystem und stromaufwärts von dem zweiten Haltersystem des Flüssigkeitsfließwegs (52) verläuft.

22. Vorrichtung nach einem der vorhergehenden Ansprüche 17-20, **dadurch gekennzeichnet, dass** das erste Haltersystem (2) mit einem ersten Beutel (4), versehen mit der ersten Zutat (6), und einer ersten Abdeckung (8), in der die erste Zutat eingeschlossen ist, versehen ist, die erste Abdeckung zumindest teilweise aus einem blattförmigen Material wie Filterpapier, das durchlässig für die Flüssigkeit ist und eine Barriere zur ersten Zutat bildet, hergestellt ist, während das zweite Haltersystem (16) mit einem zweiten Beutel (20) versehen ist, der die zweite Zutat (18) und eine zweite Abdeckung (22), in der die zweite Zutat eingeschlossen ist, enthält, wobei die zweite Abdeckung zumindest teilweise aus einem blattförmigen Material wie Filterpapier, das durchlässig für Flüssigkeit ist und eine Barriere zur zweiten Zutat bildet, hergestellt ist.

23. Vorrichtung nach Anspruch 22, **dadurch gekennzeichnet, dass** das erste Haltersystem (2) ferner mit einem ersten Halter (72) mit mindestens einer Einflussöffnung (11, 74) und mindestens einer Ausflussöffnung (13, 78) versehen ist, wobei der erste Beutel (4) in dem ersten Halter enthalten ist, das zweite Haltersystem (16) ferner mit einem zweiten Halter (80) mit einer Einflussöffnung (26, 82) und einer Ausflussöffnung (28, 86) versehen ist, während bei Gebrauch der zweite Beutel (20) in dem zweiten Halter (80) enthalten ist, während der zweite Teil der Flüssigkeitsmenge der Einflussöffnung (26, 82) des zweiten Halters zugeführt wird, sodass die Flüssigkeit durch den zweiten Beutel (20) fließt, um den zweiten Getränkteil zu erhalten, der den zweiten Halter über die Ausflussöffnung (28, 86) des zweiten Halters verlässt, der erste Teil der Flüssigkeitsmenge der Einflussöffnung (11, 74) des ersten Halters zugeführt wird, sodass die Flüssigkeit durch den ersten Beutel (4) fließt, um den ersten Getränkteil zu erhalten, der den ersten Halter über die Ausflussöffnung (13, 78) des ersten Halters verlässt.

24. Vorrichtung nach einem der vorhergehenden Ansprüche 17-23, **dadurch gekennzeichnet, dass** die Flüssigkeitszufuhrmittel (36, 68) konzipiert sind, um den ersten Teil der Flüssigkeitsmenge unter Druck dem ersten Haltersystem (2) zuzuführen.

25. Vorrichtung nach einem der vorhergehenden Ansprüche 17-24, **dadurch gekennzeichnet, dass** die Flüssigkeitszufuhrmittel (36, 68) konzipiert sind, um den zweiten Teil der Flüssigkeitsmenge unter Druck dem zweiten Teil des zweiten Haltersystems (16) zuzuführen.

26. Vorrichtung nach einem der vorhergehenden Ansprüche 17-25, **dadurch gekennzeichnet, dass** die Flüssigkeitszufuhrmittel (36, 68) konzipiert sind, um den ersten Teil der Flüssigkeitsmenge zu erwärmen.

27. Vorrichtung nach einem der vorhergehenden Ansprüche 17-26, **dadurch gekennzeichnet, dass** die Flüssigkeitszufuhrmittel (36, 68) konzipiert sind, um den zweiten Teil der Flüssigkeitsmenge zu erwärmen.

28. Vorrichtung nach einem der vorhergehenden Ansprüche 17-27, **dadurch gekennzeichnet, dass** die Flüssigkeitszufuhrmittel (36, 68) konzipiert sind, um erst den zweiten Teil der Flüssigkeitsmenge dem zweiten Haltersystem (16) zuzuführen und dann den ersten Teil der Flüssigkeitsmenge dem ersten Haltersystem (2) zuzuführen.

29. Vorrichtung nach einem der vorhergehenden Ansprüche 17-28, **dadurch gekennzeichnet, dass** die Vorrichtung ferner mit Lufteinschlagmitteln (62) versehen ist, um Luft in den ersten und/oder zweiten Getränkteil einzuschlagen.

30. Vorrichtung nach einem der vorhergehenden Ansprüche 17-29, **dadurch gekennzeichnet, dass** die Vorrichtung konzipiert ist, um den ersten Getränkteil in Form eines Strahls abzugeben.

31. Vorrichtung nach einem der vorhergehenden Ansprüche 17-30, **dadurch gekennzeichnet, dass** die Vorrichtung konzipiert ist, um den zweiten Getränkteil in Form eines Strahls abzugeben.

32. Vorrichtung nach Anspruch 18, 19 oder 21, **dadurch gekennzeichnet, dass** der Umgehungskanal (54, 60) mit einem druckempfindlichen Ventil versehen ist, während das Öffnen oder Schließen des Ventils von dem vorherrschenden Druck am Eingang des Ventils abhängt.

33. Vorrichtung nach einem der vorhergehenden Ansprüche 17-32, **dadurch gekennzeichnet, dass** die Wasserzufuhrmittel (36, 68) konzipiert sind, um den Druck, mit dem eine Flüssigkeit der Einflussseite (11) des ersten Haltersystems (2) zugeführt wird, zu regulieren.

34. Vorrichtung nach den Ansprüchen 18, 19 oder 21, **dadurch gekennzeichnet, dass** der Umgehungskanal (54, 60) mit einem Ventil zum Freigeben und Abschließen des Umgehungskanals versehen ist, das Ventil so konzipiert ist, dass es den Umgehungskanal freigibt, wenn der Druck im Umgehungskanal unter einem vorbestimmten Wert liegt, die Flüssigkeitszufuhrmittel (36, 68) ferner konzipiert sind, um, wenn die zweite Flüssigkeitsmenge an die Einflussseite (11) des ersten Haltersystems (2) abgegeben wird, eine zweite Flüssigkeitsmenge mit einem Druck, der niedriger als der vorbestimmte Wert ist, abzugeben, sodass das Ventil des Umgehungskanals (54, 60) geöffnet wird, und um, wenn die erste Flüssigkeitsmenge an die Einflussseite (11) des ersten Haltersystems abgegeben wird, die erste Flüssigkeitsmenge mit einem Druck, der höher als der vorbestimmte Wert ist, abzugeben, sodass das Ventil des Umgehungskanals (54, 60) geschlossen wird.

35. Vorrichtung nach einem der vorhergehenden Ansprüche 17-34, nicht gefüllt mit der ersten Zutat (6) und der zweiten Zutat (18).

36. Verfahren nach einem der Ansprüche 1-16, **dadurch gekennzeichnet, dass** mindestens eine der Zutaten (6, 18) mit einer Substanz versehen ist, die bei Kontakt mit einer Flüssigkeit wie beispielsweise Wasser einen Schaum erzeugt.

37. Verfahren nach Anspruch 36, **dadurch gekennzeichnet, dass** die erste Zutat (6) gemahlenen Kaffee umfasst und dass die zweite Zutat (18) Milchpulver/Kaffeweißer und eine Substanz umfasst, die bei Kontakt mit einer Flüssigkeit wie beispielsweise Wasser einen Schaum erzeugt.

38. Vorrichtung nach einem der vorhergehenden Ansprüche 17-34, **dadurch gekennzeichnet, dass** mindestens eine der Zutaten (6, 18) mit einer Substanz versehen ist, die bei Kontakt mit einer Flüssigkeit wie beispielsweise Wasser einen Schaum erzeugt.

39. Vorrichtung nach Anspruch 38, **dadurch gekennzeichnet, dass** die erste Zutat (6) gemahlenen Kaffee umfasst und dass die zweite Zutat (18) ein Milchpulver/ Kaffeweißer und eine Substanz umfasst, die bei Kontakt mit einer Flüssigkeit wie beispielsweise Wasser einen Schaum erzeugt.

## Revendications

1. Procédé de préparation de boisson adaptée à la consommation à partir d'au moins deux ingrédients (6, 18) à dissoudre et/ou extraire et d'une quantité de liquide tel que l'eau qui est fourni aux ingrédients, le procédé comprenant les étapes suivantes :
- un premier ingrédient (6) est utilisé dans un premier système porteur (2) ; et
- un second ingrédient (18) est utilisé dans un second système porteur (16),
le second ingrédient (18) différant du premier ingrédient (6) et le procédé comprenant en outre les étapes suivantes consistant à :
- commander la fourniture d'une première partie prédéterminée de la quantité de liquide tel que l'eau chaude en utilisant un moyen de fourniture de liquide (36, 68) au premier système porteur (2) de sorte que le premier système porteur soit parcouru par le liquide moyennant quoi le premier ingrédient (6) est dissous ou extrait pour obtenir une première partie de boisson ;
- commander la fourniture d'une seconde partie prédéterminée de la quantité de liquide en utilisant les moyens de fourniture de liquide (36, 68) au second système porteur (16) de sorte que le second système porteur soit parcouru par le liquide de telle sorte que le second ingrédient (18) soit dissous et extrait pour obtenir une seconde partie de boisson ; et
- la première partie de boisson et la seconde partie de boisson sont combinées pour obtenir la boisson, **caractérisé en ce que**, tout d'abord, la seconde partie de la quantité de liquide est fournie au second système porteur (16) et, après cela, la première partie de la quantité de liquide est fournie au premier système porteur (2), et **en ce que** la première partie de boisson est également fournie à partir du premier système porteur (2) au second système porteur (16) et, après cela, à partir du second système porteur, est combinée avec la seconde partie de boisson.

2. Procédé selon la revendication 1, **caractérisé en ce que** le premier ingrédient (6) comprend un produit à extraire tel que du café moulu, le premier système porteur (2) étant pourvu d'un premier sachet (4) pourvu du premier ingrédient (6) et d'une première enveloppe (8) dans laquelle le premier ingrédient est inclus, la première enveloppe étant fabriquée, au moins en partie, à partir d'un matériau en forme de feuille tel qu'un papier filtrant, laissant passer l'eau et formant une barrière au premier ingrédient, et **en ce que** le second ingrédient (18) comprend un produit soluble dans l'eau tel qu'un succédané de crème/du lait en poudre, le second système porteur (16) étant pourvu d'un second sachet (20) pourvu du second ingrédient et d'une seconde enveloppe (22) dans laquelle le second ingrédient est inclus, la seconde enveloppe étant fabriquée, au moins en partie à partir d'un matériau en forme de feuille tel qu'un papier filtrant, laissant passer le liquide formant une barrière au second ingrédient.

3. Procédé selon la revendication 2, **caractérisé en ce que** le premier système porteur (2) est en outre pourvu d'un premier support avec au moins un côté entrant (11) et au moins un côté sortant (13), le premier sachet (4) étant inclus dans le premier support, tandis que le second système porteur (16) est en outre pourvu d'un second support avec un côté entrant (26) et un côté sortant (28), le second sachet (20) étant inclus dans le second support, et dans lequel la seconde partie de la quantité de liquide est fournie au côté entrant (26) du second support de sorte que le liquide s'écoule à travers le second sachet (20) pour obtenir la seconde partie de boisson qui quitte le second support via le côté sortant (28) du second support, tandis que la première partie de la quantité de liquide est fournie au côté entrant (11) du premier support de sorte que le liquide s'écoule à travers le premier sachet (4) pour obtenir la première partie de boisson qui quitte le premier support via le côté sortant (13) du premier support.

4. Procédé selon les revendications 1 et 3, **caractérisé en ce que** la première partie de boisson qui quitte le premier support est fournie au côté entrant (26) du second support de sorte que la première partie de boisson s'écoule à travers le second sachet (20) et, sur ce, quitte le second support via le côté sortant (28) du second support.

5. Procédé selon la revendication 3 ou 4, **caractérisé en ce que** la seconde partie de boisson est tout d'abord fournie au côté entrant (11) du premier support et est ensuite réacheminée vers le côté entrant (26) du second support et s'écoule à travers le second support sans s'écouler à travers le premier support.

6. Procédé selon l'une quelconque des revendications précédentes, **caractérisé en ce que** le premier système porteur (2) et le second système porteur (16) sont inclus dans un contenant collecteur (30).

7. Procédé selon la revendication 6, **caractérisé en ce que** le contenant de collecteur (30) est pourvu d'une ouverture d'amenée (48) et d'une ouverture d'écoulement (50), la première partie et la seconde partie de quantité de liquide étant fournies au contenant collecteur, après cela la seconde partie de la quantité de liquide est délivrée au second système porteur (16) et la première partie de la quantité de liquide est délivrée au premier système porteur (2).

8. Procédé selon l'une quelconque des revendications précédentes, **caractérisé en ce que** la première et la seconde partie de boisson sont combinées dans un troisième contenant tel qu'une tasse ou un mug (70).

9. Procédé selon l'une quelconque des revendications précédentes, **caractérisé en ce que** de l'air est introduit vivement ou fouetté dans la seconde partie de boisson.

10. Procédé selon l'une quelconque des revendications précédentes, **caractérisé en ce que** de l'air est introduit vivement dans la première partie de boisson.

11. Procédé selon l'une quelconque des revendications précédentes, **caractérisé en ce que** la première partie de la quantité de liquide est fournie sous pression au premier système porteur (2).

12. Procédé selon l'une quelconque des revendications précédentes, **caractérisé en ce que** la seconde partie de la quantité de liquide est fournie sous pression au second système porteur (16).

13. Procédé selon l'une quelconque des revendications précédentes, **caractérisé en ce que** la première partie de la quantité de liquide est chauffée.

14. Procédé selon l'une quelconque des revendications précédentes, **caractérisé en ce que** la seconde partie de la quantité de liquide est chauffée.

15. Procédé selon l'une quelconque des revendications précédentes, **caractérisé en ce que** la première partie de boisson est distribuée sous forme de jet.

16. Procédé selon l'une quelconque des revendications précédentes, **caractérisé en ce que** la seconde partie de boisson est distribuée sous forme de jet.

17. Appareil (1) de préparation de boisson adaptée à la consommation à partir d'au moins deux ingrédients (6, 18) à dissoudre et/ou extraire et d'une quantité de liquide tel que l'eau qui est fourni aux ingrédients, l'appareil étant pourvu d'un premier système porteur (2) dans lequel un premier ingrédient (6) est inclus, le premier système porteur étant pourvu d'au moins un côté entrant (11) et d'au moins un côté sortant (13), l'appareil étant en outre pourvu d'un second système porteur (16) dans lequel un second ingrédient (18) est inclus, le second système porteur étant pourvu d'au moins un côté entrant (26) et d'au moins un côté sortant (28), l'appareil étant en outre pourvu d'un moyen de fourniture de liquide (36, 68) pour fournir au côté entrant (11) du premier système porteur (2) une première partie prédéterminée de la quantité de liquide de sorte que le premier système porteur soit parcouru par le liquide moyennant quoi le premier ingrédient (6) est extrait, ou se dissolve, pour obtenir une première partie de boisson qui quitte le premier système porteur via le côté sortant (13) du premier système porteur (2), et pour fournir au côté entrant (26) du second système porteur (16) une seconde partie prédéterminée de la quantité de liquide de sorte que le second système porteur soit parcouru par le liquide moyennant quoi le second ingrédient (18) est extrait, ou se dissout, pour obtenir une seconde partie de boisson qui quitte le second système porteur via le côté sortant (28) du second système porteur, et dans lequel l'appareil est en outre conçu pour distribuer la première partie de boisson à un contenant de réception tel qu'une tasse ou un mug (70), **caractérisé en ce que** les moyens de fourniture de liquide (36, 68) sont conçus pour fournir, tout d'abord, la seconde partie de la quantité de liquide au second système porteur (16), et après cela, fournir la première partie de la quantité de liquide au premier de système porteur (2), et **en ce que** le côté sortant (13) du premier système porteur (2) est en communication fluidique avec le côté entrant (26) du second système porteur (16) de sorte que, en utilisation, la première partie de boisson soit fournie par le côté sortant (13) du premier système porteur via le côté entrant (26) du second système porteur au second système porteur et, sur ce, s'écoule du second système porteur au second du côté sortant (28) du second système porteur.

18. Appareil selon la revendication 17, **caractérisé en ce que** les moyens de fourniture de liquide (36, 68) sont pourvus d'un canal de dérivation scellable et libérable (54, 60) s'étendant depuis le côté entrant (11) du premier système porteur (2) vers le côté entrant (26) du second système du support (16), les moyens de fourniture de liquide (36, 68) étant en outre conçus pour fournir la seconde partie de la quantité de liquide au côté entrant (11) du premier système porteur (2) tandis que le canal de dérivation (54, 60) est ouvert de sorte que la seconde partie de la quantité de liquide s'écoule directement via de canal de dérivation (54, 60) via le côté entrant (26) du second système porteur (16) à travers le second système porteur de sorte que le second ingrédient (18) soit dissous ou extrait pour obtenir la seconde partie de boisson qui quitte le second système porteur ou bien le côté sortant (28) du second système porteur, et pour fournir la première partie de la quantité de liquide au côté entrant (11) du premier de système support (2) tandis que le canal de dérivation (54, 60) est fermé de sorte que la première partie de la quantité de liquide s'écoule via le côté entrant (26) du second système porteur (16) à travers le premier système porteur (2) de sorte que le premier ingrédient (6) soit extrait, ou se dissolve, pour obtenir la première partie de boisson qui quitte le premier système porteur via le côté sortant (13) du premier système porteur.

19. Appareil selon la revendication 18, **caractérisé en ce qu'**une admission (56) du canal de dérivation (54, 60) est située près du côté entrant (11) à l'extérieur du premier système porteur (2).

20. Appareil selon l'une quelconque des revendications précédentes 17 à 19, **caractérisé en ce que** l'appareil est en outre pourvu d'un contenant collecteur (30) dans lequel le premier et le second système porteur (2, 16) sont inclus.

21. Appareil selon les revendications 18 et 20, **caractérisé en ce que** le contenant collecteur (30) est pourvu d'au moins une ouverture d'amenée (48) et d'au moins une ouverture d'écoulement (50) et d'un chemin d'écoulement liquide (52) s'étendant depuis l'ouverture d'amenée vers l'ouverture d'écoulement du contenant collecteur, les premier et second systèmes de support (2, 16) étant inclus dans le chemin d'écoulement liquide (52) du contenant collecteur de sorte que les premier et second systèmes de support forment chacun une barrière dans le chemin d'écoulement de liquide , le premier système porteur (2) étant situé en amont du second système porteur (16) dans le chemin d'écoulement de liquide du contenant collecteur, tandis que le canal de dérivation (54, 60) à fermer et libérer s'étend depuis une position (56) située en amont du premier système porteur du chemin d'écoulement de liquide vers une position (58) en aval du premier système porteur et en amont du second système porteur du chemin d'écoulement de liquide (52).

22. Appareil selon l'une quelconque des revendications précédentes 17 à 20, **caractérisé en ce que** le premier système porteur (2) est pourvu d'un premier sachet (4) pourvu du premier ingrédient (6) et d'une première enveloppe (8) dans laquelle le premier ingrédient est inclus, la première enveloppe étant fabriquée, au moins en partie, à partir d'un matériau en forme de feuille tel qu'un papier filtrant, laissant passer le liquide et formant une barrière au premier ingrédient tandis que le second système porteur (16) est pourvu d'un second sachet (20) pourvu du second ingrédient (18) et d'une seconde enveloppe (22) dans laquelle le second ingrédient est inclus, la seconde enveloppe étant fabriquée, au moins en partie, à partir d'un matériau en forme de feuille tel qu'un papier filtrant, laissant passer le liquide et formant une barrière au second ingrédient.

23. Appareil selon la revendication 22, **caractérisé en ce que** le premier système porteur (2) est en outre pourvu d'un premier support (72) avec au moins une ouverture d'amenée (11, 74) et au moins une ouverture d'écoulement (13, 78), le premier sachet (4) étant inclus dans le premier support, le second système porteur (16) étant en outre pourvu d'un second support (80) avec une ouverture d'amenée (26, 82) et une ouverture d'écoulement (28, 86) tandis qu'en utilisation, le second sachet (20) est inclus dans le second support (80), tandis que la seconde partie de la quantité de liquide est fournie à l'ouverture d'amenée (26, 82) du second support de sorte que le liquide s'écoule à travers le second sachet (20) pour obtenir la seconde partie de boisson qui quitte le second support via l'ouverture d'écoulement (28, 86) du second support, la première partie de la quantité de liquide étant fournie à l'ouverture d'amenée (11, 74) du premier support de sorte que le liquide s'écoule à travers le premier sachet (4) pour obtenir la première partie de boisson qui quitte le premier support via l'ouverture d'écoulement (13, 78) du premier support.

24. Appareil selon l'une quelconque des revendications précédentes 17 à 23, **caractérisé en ce que** les moyens de fourniture de liquide (36, 68) sont conçus pour fournir la première partie de la quantité de liquide sous pression au premier système porteur (2).

25. Appareil selon l'une quelconque des revendications 17 à 24, **caractérisé en ce que** les moyens de fourniture de liquide (36, 68) sont conçus pour fournir la seconde partie de la quantité de liquide sous pression au second système porteur (16).

26. Appareil selon l'une quelconque des revendications précédentes 17 à 25, **caractérisé en ce que** les moyens de fourniture de liquide (36, 68) sont conçus pour chauffer la première partie de la quantité de liquide.

27. Appareil selon l'une quelconque des revendications précédentes 17 à 26, **caractérisé en ce que** les moyens de fourniture de liquide (36, 68) sont conçus pour chauffer la seconde partie de la quantité de liquide.

28. Appareil selon l'une quelconque des revendications précédentes 17 à 27, **caractérisé en ce que** les moyens de fourniture de liquide (36, 68) sont conçus pour fournir, tout d'abord, la seconde partie de la quantité de liquide au second système du support (16) et, ensuite, fournir la première partie de la quantité de liquide au premier système porteur (2).

29. Appareil selon l'une quelconque des revendications précédentes 17 à 28, **caractérisé en ce que** l'appareil est en outre pourvu d'un moyen d'introduction vive d'air (62) pour introduire vivement de l'air dans la première et/ou la seconde partie de boisson.

30. Appareil selon l'une quelconque des revendications précédentes 17 à 29, **caractérisé en ce que** l'appareil est conçu pour distribuer la première partie de boisson sous forme de jet.

31. Appareil selon l'une quelconque des revendications précédentes 17 à 30, **caractérisé en ce que** l'appareil est conçu pour distribuer la seconde partie de boisson sous forme de jet.

32. Appareil selon la revendication 18, 19, ou 21, **caractérisé en ce que** le canal de dérivation (54, 60) est pourvu d'une vanne sensible à la pression tandis que l'ouverture ou la fermeture de la vanne dépend de la pression régnant au niveau d'une entrée de la vanne.

33. Appareil selon l'une quelconque des revendications précédentes 17 à 32, **caractérisé en ce que** les moyens de fourniture d'eau (36, 68) sont conçus pour réguler la pression avec laquelle un liquide est fourni au côté entrant (11) du premier système porteur (2).

34. Appareil selon la revendication 18, 19, ou 21, **caractérisé en ce que** le canal de dérivation (54, 60) est pourvu d'une vanne pour libérer et fermer le canal de dérivation, la vanne étant conçue de sorte qu'elle libère le canal de dérivation lorsque la pression dans le canal de dérivation est en dessous d'une valeur prédéterminée, les moyens de fourniture de liquide (36, 68) étant en outre conçus pour distribuer, lorsque la seconde quantité de liquide est en cours de distribution au côté entrant (11) du premier système porteur (2), une seconde quantité de liquide à une pression qui est inférieure à la valeur prédéterminée de sorte que la vanne du canal de dérivation (54, 60) soit ouverte et pour distribuer, lorsque la première quantité de liquide est en cours de distribution au côté entrant (11) du premier système porteur (2), la première quantité de liquide à une pression qui est supérieure à la valeur prédéterminée de sorte que la vanne du canal de dérivation (54, 60) soit fermée.

35. Appareil selon l'une quelconque des revendications précédentes 17 à 34, non rempli par le premier ingrédient (6) et le second ingrédient (18).

36. Procédé selon l'une quelconque des revendications 1 à 16, **caractérisé en ce qu'**au moins l'un des ingrédients (6, 18) est pourvu d'une substance générant de la mousse lorsqu'elle est mise en contact avec un liquide tel que l'eau.

37. Procédé selon la revendication 36, **caractérisé en ce que** le premier ingrédient (6) comprend du café moulu et **en ce que** le second ingrédient (18) comprend du lait en poudre/un succédané de crème et une substance générant de la mousse lorsqu'elle est mise en contact avec un liquide tel que l'eau.

38. Appareil selon l'une quelconque des revendications précédentes 17 à 34, **caractérisé en ce qu'**au moins l'un des ingrédients (6, 18) est pourvu d'une substance générant de la mousse lorsqu'elle est mise en contact avec un liquide tel que l'eau.

39. Appareil selon la revendication 38, **caractérisé en ce que** le premier ingrédient (6) comprend du café moulu et **en ce que** le second ingrédient (18) comprend du lait en poudre/un succédané de crème et une substance générant de la mousse lorsqu'elle est mise en contact avec un liquide tel que l'eau.
